## Europäisches Patentamt

## European Patent Office

## Office européen des brevets

(11) Veröffentlichungsnummer: **0 148 444**
**A2**

(12) **EUROPÄISCHE PATENTANMELDUNG**

(21) Anmeldenummer: **84115262.2**

(22) Anmeldetag: **12.12.84**

(51) Int. Cl.⁴: **B 01 D 17/022, C 02 F 1/40**

(30) Priorität: **24.12.83 DE 3346931**

(43) Veröffentlichungstag der Anmeldung: **17.07.85**
**Patentblatt 85/29**

(84) Benannte Vertragsstaaten: **DE FR GB NL SE**

(71) Anmelder: **Howaldtswerke-Deutsche Werft Aktiengesellschaft Hamburg und Kiel, Schwentinestrasse, D-2300 Kiel 14 (DE)**

(72) Erfinder: **Fischer, Frank, Vogteiweg 4, D-2000 Hamburg 76 (DE)**
Erfinder: **Reitmeier, Gerhold, In der Kerbe 22, D 6442 Rotenburg (DE)**

(74) Vertreter: **Kaiser, Henning et al, Howaldtswerke-Deutsche Werft Aktiengesellschaft Hamburg und Kiel Patentabteilung Rossweg 20 Postfach 11 14 80, D-2000 Hamburg 11 (DE)**

(54) **Verfahren und Vorrichtung zum Trennen eines Öl-Wasser-Gemisches.**

(57) In einer Vorrichtung zum Trennen eines Gemisches aus Öl und Wasser ist ein Vorabscheideraum (4) vorgesehen, in dem zunächst die gröberen Bestandteile des Öls von dem Gemisch abgetrennt werden. Das so vorgereinigte Gemisch wird von unten über eine perforierte Platte (8) in eine Koaleszierkammer (2) eingeleitet. Die Koaleszierkammer (2) enthält eine Vielzahl von Koaleszierkörpern (3), die aus einem oleophilen Kunststoff bestehen und leichter als Wasser sind. Sie besitzen eine Form, die eine spezifisch große Oberfläche und einen relativ großen freien Strömungsquerschnitt ergibt. Die Körper sind beispielsweise Ringe mit Öffnungen in den zylindrischen Wänden. Die Körper besitzen eine Oberfläche von wenigstens 300 m² je 1 m³ des von ihnen ausgefüllten Volumens, wobei das Materialvolumen der Körper selbst nur höchstens 20% dieses Volumens beträgt. An der oleophilen Oberfläche dieser Körper setzen sich auch feinste Ölpartikel ab, die auf den Körpern zusammenfließen und als größere, leicht abtrennbare Öltropfen in den Abscheideraum (12) aufsteigen, wo sie sich an seinem oberen Ende in einem Ölsammelraum (28) ansammeln, von wo sie über eine Leitung (15) entfernt werden können. Aus dem Abscheideraum (12) fließt das Wasser über eine Trennwand (16) durch ein Rohr (17) ab.

**HOWALDTSWERKE - DEUTSCHE WERFT** AKTIENGESELLSCHAFT HAMBURG UND KIEL

– 1 –

Verfahren und Vorrichtung zum Trennen eines
Öl-Wasser-Gemisches

Die Erfindung bezieht sich auf ein Verfahren und eine
Vorrichtung zum Trennen eines Öl-Wasser-Gemisches.

Zur Trennung von Öl und Wasser, beispielsweise bei der
Bilgenwasserentölung auf Schiffen, hat man das Gemisch
bisher häufig über parallele Platten geleitet, an denen
sich Öl absetzt und hierdurch vom Wasser getrennt wird.
In derartigen Vorrichtungen und bei fein dispergiertem
Öl sowie bei Gemischen, die ölige Bestandteile enthalten,
deren spezifisches Gewicht fast dem des Wassers entspricht, ist der heute geforderte niedrige Restölgehalt
nur schwer zu erreichen, so daß zusätzliche Einrichtungen etwa nach Art von Filtern notwendig sind, um auch
die noch im Wasser enthaltenen feinsten Öltröpfchen
abzutrennen. Filter und ähnliche Einrichtungen besitzen
den Nachteil, daß sie durch Verschmutzungen verstopfen
können und daher ein Auswechseln oder eine Reinigung
notwendig wird. Wartungsarbeiten werden im Schiffsbetrieb häufig nicht mit genügender Sorgfalt durchgeführt,
zumal die Abscheideeinrichtungen in unregelmäßigen
Abständen eingesetzt werden und die Zusammensetzung des
Öl-Wasser-Gemisches sehr unterschiedlich sein kann.

Es ist die Aufgabe der Erfindung, ein Verfahren und eine
Vorrichtung für ein ausreichendes Trennen eines Öl-
Wasser-Gemisches zu schaffen, mit denen eine Ölabscheidung über einen langen Zeitraum wartungsfrei und mit
einem zulässige Werte nicht überschreitenden, niedrigen
Restölgehalt durchgeführt werden kann.

Nach dem Verfahren wird in an sich bekannter Weise das

Öl-Wasser-Gemisch zunächst durch Schwerkrafttrennung von gröberen Ölbestandteilen befreit und das so vorgereinigte Gemisch wird durch eine Kammer geleitet, in der die im Wasser eingeschlossenen kleinen Ölpartikel zur Vereinigung zu größeren Tropfen gebracht werden, die aus dem Wasser abtrennbar sind. Erfindungsgemäß ist vorgesehen, daß das vorgereinigte Gemisch in einer Behandlungszeit von 5 bis 15 Minuten, vorzugsweise von 10 Minuten, durch eine Schicht von einzelnen losen Koaleszierkörpern geleitet wird, wobei Wasser und das zusammenfließende Öl nach oben durch die Schicht aufsteigen und das gereinigte Wasser oberhalb der Schicht getrennt von dem sich oben ansammelnde Öl abgeführt wird.

Die erfindungsgemäße, zur Durchführung des Verfahrens vorgesehene Vorrichtung umfaßt einen Vorabscheideraum, eine Koaleszierkammer und eine Abscheidekammer. In dem Vorabscheideraum werden Öl und größere Öltropfen durch Schwerkraft abgeschieden und steigen aufwärts in einen Ölsammelraum innerhalb dieses Grobabscheiders, von wo sie entfernt werden können. Es wurde gefunden, daß insbesondere bei der Bilgenwasserentölung der größere Teil des Öls aus dem Gemisch in dem Grobabscheider ähnlich wie in bekannten Einrichtungen entfernt werden kann. Danach wird das Gemisch, welches Wasser, kleine Tropfen und sehr feine Ölpartikel enthält, in die Koaleszierkammer geleitet, und hier fließen die Ölpartikel zusammen und steigen gemeinsam auf in die Abscheidekammer, wo die zusammengeflossenen Öltropfen leicht von dem Wasser getrennt werden können. Das Öl wird ebenfalls entfernt und fließt in einen Öltank oder wird in eine Einrichtung zurückgeführt, die das Öl-Wasser-Gemisch zuleitet.Letzteres ist insbesondere dann vorteilhaft, wenn mit dem Öl aus der letzten Kammer auch etwas Wasser entfernt wird. Dieses Öl wird dem Gemisch zugefügt, welches in die Vorrichtung eingeleitet wird.

Der wesentliche Teil der erfindungsgemäßen Vorrichtung ist die Koaleszierkammer. Diese Kammer schließt eine Vielzahl von losen einzelnen Koaleszierkörpern ein, die in dem aufwärts gerichteten Strom des Gemisches in der Kammer schwimmen und sich gegeneinander bewegen können.

Die Koaleszierkörper bestehen aus einem oleophilen thermoplastischen Material, wie einem Polyolefin insbesondere Polypropylen. Das Material hat ein spezifisches Gewicht, das kleiner ist als Wasser. Die Koaleszierkörper haben eine Form, die eine sehr große Oberfläche im Bezug auf ihr Materialvolumen und im Bezug auf das von ihnen bei unregelmäßiger Anordnung eingenommene Volumen innerhalb und um die Körper herum ergibt. Die Koaleszierkörper können die Form eines zylindrischen Ringes besitzen, dessen Länge etwa gleich seinem äußeren Durchmesser ist, dessen zylindrische Wand mit Öffnungen versehen ist und in dem Querstege angeordnet sind. Jedoch sind auch andere Formen möglich beispielsweise Kugeln mit Öffnungen und inneren Stegen. Körper dieser Art sind an sich bekannt und werden üblicherweise in chemischen Apparaten angewendet, um zur Verbesserung chemischer Reaktionen eine Flüssigkeit und ein Gas in besseren Kontakt zu bringen. Nach der Erfindung werden Koaleszierkörper einer solchen Form und Größe verwendet, daß sie bei unregelmäßiger Anordnung in einem Raum von 1 m$^3$ eine gesamte Oberfläche von 300 m$^2$ und ein Materialvolumen von nicht mehr als 0,2 m$^3$ besitzen, so daß 80 % eines solchen Raumes mit dem Gemisch gefüllt werden können. In einer bevorzugten Ausführung des Koaleszierkörper beträgt ihr Materialvolumen nur 13 % des Raumes, in den sie gefüllt werden und ihre gesamte Oberfläche ist 350 m$^2$. Bevorzugte ringförmige Koaleszierkörper hatten einen äußeren Durchmesser und eine Länge von etwa 15 mm.

Das aus dem Vorabscheideraum kommende Gemisch wird in die Koaleszierkammer über eine perforierte Platte oder Siebfläche verteilt. Das Gemisch steigt durch die schwimmende Schicht von Koaleszierkörpern auf. Dabei ändert jede kleine Menge des Gemisches sehr oft die Durchflußrichtung und wahrscheinlich auch die Geschwindigkeit und wird dabei zerteilt und wieder vereinigt, wenn sie in und zwischen den Koaleszierkörpern fließt. Dies führt dazu, daß auch sehr kleine Tröpfchen und feinste Ölpartikel an eine Oberfläche der Koaleszierkörper herangeführt werden, wo sie anhaften und sich sammeln, um größere Tropfen zu bilden. Eine gewisse Turbulenz an den Körpern scheint zur Vereinigung der Ölpartikel zweckmäßig zu sein. Diese tritt auch bei der geringen Durchflußgeschwindigkeit auf, die der Behandlungszeit in der Schicht von etwa 5 bis 25 Minuten entspricht.

Der Strömungswiderstand der Schicht aus lose schwimmenden Körpern ist relativ gering, da an ihnen viel freier Raum vorhanden ist. Das Gemisch kann daher in für die geringe Strömungsgeschwindigkeit ausreichender Weise entweder mit geringem Druck durch eine vorgeschaltete Pumpe zugeführt werden oder Öl und Wasser werden durch nachgeschaltete geeignete Einrichtungen mittels Unterdruck abgezogen.

Ferner wird eine Höhe der Schicht von Koaleszierkörpern von etwa 0,5 m für ausreichend angesehen. Eine Höhe von 0,35 m ist möglich, wenn eine sehr niedrige Fließgeschwindigkeit des Gemisches angewendet werden kann oder wenn sich das üblicherweise in einem Gemisch vorkommende Öl leicht absetzt.

Eine Strömungsgeschwindigkeit des Gemisches in der Koaleszierkammer von etwa 0,05 m pro Minute wurde als optimal angesehen, insbesondere für an Bord von Schiffen benutzte Vorrichtungen, die nur begrenzte Abmessungen haben dürfen, aber doch den internationalen Bestimmungen über die Reinigung des Wassers entsprechen müssen.

Das Volumen der Koaleszierkammer ist größer als mindestens für die Aufnahme der Koaleszierkörper notwendig ist. Es ist wenigstens 10 % größer, so daß die Koaleszierkörper sich frei bewegen und aufschwimmen können, so lange die Kammer mit Wasser oder dem Gemisch gefüllt ist. Ein freies Schwimmen der Koaleszierkörper hat den zusätzlichen Vorteil, daß die Schicht nicht durch Schmutz oder festere Ölbestandteile blockiert oder verstopft werden kann und daß jede Strömungsänderung beispielsweise bei der Unterbrechung des Verfahrens eine neue Anordnung der Körper innerhalb der Koaleszierkammer ergibt.

Weitere Einzelheiten der Erfindung werden anhand der auf den Zeichnungen schematisch dargestellten Ausführungsbeispiele im folgenden näher beschrieben. Es zeigen Fig. 1 einen senkrechten Schnitt durch eine Vorrichtung, die als stehender Zylinder ausgebildet ist, Fig. 2 einen senkrechten Schnitt durch eine andere Vorrichtung mit einem im wesentlichen horizontalen Behälter, Fig. 3 einen vertikalen Schnitt durch eine andere Vorrichtung mit horizontalem Behälter, der zwei aufeinander folgende Koaleszierkammern enthält.

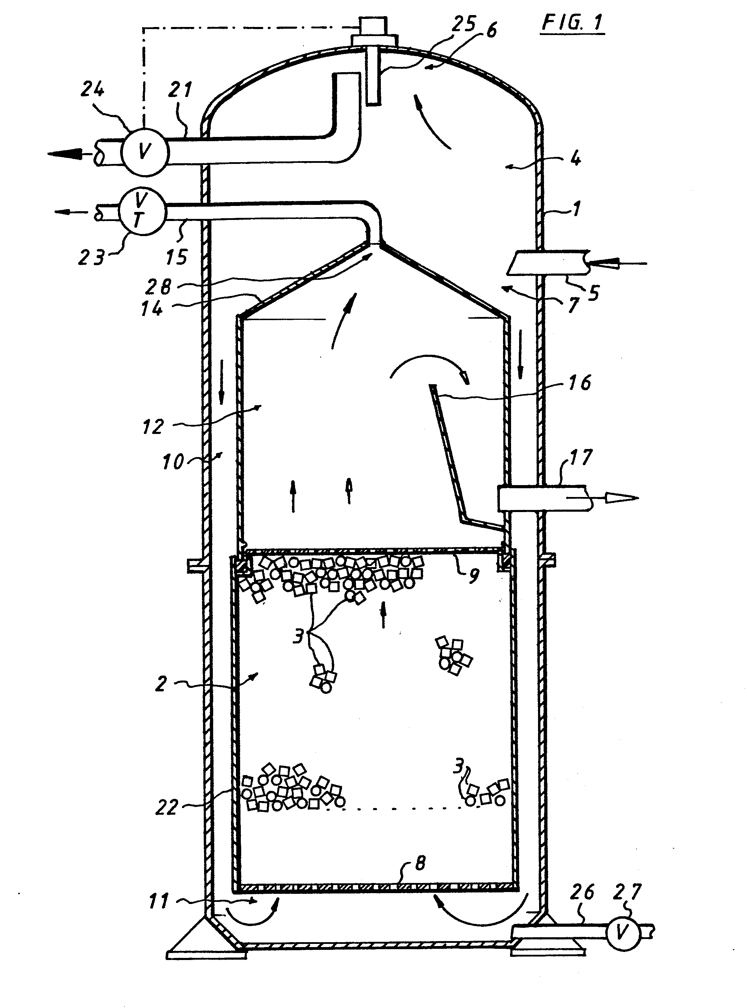

In der bevorzugten Ausführung nach Fig. 1 enthält ein im wesentlichen zylindrischer und senkrechter Behälter 1 beziehungsweise ein solches Gehäuse einen Grobabscheideraum 4, eine Koaleszierkammer 2 und eine Abscheidekammer 12. Der Grobabscheideraum 4 ist innerhalb des Behälters 1 angeordnet und bildet den oberen Teil dieses Behälters. Ein Zuführungsrohr 5 für das Öl-Wasser-Gemisch ist in den unteren Teil 7 des Grobabscheideraums 4 geführt. Dort wird die Strömung des Gemisches durch nicht dargestellte Mittel gezwungen, um das Zentrum des Behälters zu zirkulieren, um eine verbesserte Verteilung in der Vorrichtung zu erreichen. In dem Vorabscheideraum 4 steigt ein größerer Teil des Öles auf, das in durchschnittlichem Bilgenwasser enthalten ist und in Form größerer Tropfen oder bereits zusammengeflossener Ölmengen vorliegt. Dieses Öl sammelt sich in einem Ölsammelraum 6 oben in der Vorabscheidekammer 4, von wo es durch ein Ölauslaßrohr 21 entfernt wird. In dem Ölsammelraum 6 ist ein Ölstandsmesser 25 beispielsweise eine Elektrode für kapazitive Messung angeordnet, die automatisch ein Auslaßventil 24 in dem Auslaßrohr 21 solange öffnet, wie sich in dem oberen Ölsammelraum genügend Öl befindet und die das Auslaßventil 24 schließt, bevor Wasser oder wasserenthaltendes Gemisch in das Auslaßrohr 21 eintreten kann.

In dem Ausführungsbeispiel nach Fig. 1 befindet sich die Koaleszierkammer 2 und die Abscheidekammer 12 in dem unteren und dem mittleren Teil des Behälters 1 mit einigem Abstand von dessen zylindrischer Wand und seinem Boden. Diese inneren Kammern werden durch nicht dargestellte Abstandshalter gehalten. Zwischen der zylindrischen Wand 13 der Abscheidekammer 12 und der zylindrischen Wand 22 der Koaleszierkammer 2 einerseits und der Wand des Behälters 1 andererseits ist ein verbindender Ringraum 10 angeordnet, durch welchen das vorgereinigte Gemisch nach unten in den Bodenraum 11 strömt, der unter einer perforierten Platte 8 angeordnet ist, welche die untere Seite der Koaleszierkammer 2 bildet. Aus dem Bodenraum 11 kann Ölschlamm gelegentlich durch ein Schlammauslaßventil 27 und eine Schlammauslaßleitung 26 entfernt werden.

Die Koaleszierkammer 2 schließt zwischen der zylindrischen Wand 22, der unteren perforierten Platte 8 und der oberen perforierten Platte 9 eine Vielzahl von Koaleszierkörpern 3 ein. Diese sind von einem oleophilen Kunststoff wie Polypropylen geformt. Die Koaleszierkörper 3 können als kleine Ringe ausgebildet sein, wie es eingangs beschrieben ist. Wenn die Koaleszierkammer 2 mit einer Flüssigkeit wie Wasser oder Öl gefüllt ist, steigen die Koaleszierkörper 3 nach oben und werden durch die obere perforierte Platte 9 zurückgehalten. Wenn die Kammer entleert wird, fallen die Körper 3 nach unten und werden durch die untere perforierte Platte innerhalb der Kammer gehalten. An den Oberflächen der Koaleszierkörper 3 haften selbst sehr kleine Ölspuren und Partikel an und verbinden sich, um größere Tropfen zu formen, die von den Körpern aufsteigen oder entlang verschiedenen Körper nach oben wandern und schließlich durch die obere perforierte Platte 9 zusammen mit dem Wasser aufsteigen.

In der Abscheidekammer 12 fließen Wasser und Öltropfen gemeinsam aufwärts. Das Wasser wird über eine Trennfläche 16 umgeleitet und durch ein Auslaßrohr 17 entfernt. Die Öltropfen sammeln sich oben in einem Ölsammelraum in der Abscheidekammer 12 unter einer konischen Wand 14. Von dem Ölsammelraum 28 der Abscheidekammer 12 wird das Öl durch eine Auslaßleitung 15 abgelassen.

Der größere Teil des Öls, der in dem Gemisch enthalten war, ist bereits in dem Vorabscheideraum 4 durch die Auslaßleitung 21 zu einem nicht dargestellten Öltank abgeführt worden. Die Ölmenge, die in dem vorgereinigten Gemisch noch enthalten ist, welches in die Koaleszierkammer 2 eingeleitet wird, ist verhältnismäßig klein und kann in jeder geeigneten Art aus dem Ölsammelraum 28 entfernt werden. In den in den Zeichnungen dargestellten Ausführungsbeispielen wird bevorzugt, einen gewissen Druck in dem Behälter aufrechtzuerhalten und einen kleinen gleichmäßigen Strom, der gegebenenfalls etwas Wasser enthalten kann, von der Abscheidekammer 12 durch ein einstellbares Drosselventil 23 abzuführen. Dieser Strom wird vorzugsweise zu einer Einrichtung, die nicht dargestellt ist, zurückgeführt, die das Gemisch in die Vorrichtung liefert.

Für einen Versuch wurde eine Vorrichtung ähnlich Fig. 1 verwendet. Die Koaleszierkammer hatte einen Durchmesser von 0,23 m und eine Höhe von 0,7 m und war mit einer Schicht von 0,5 m Höhe von ringförmigen Koaleszierkörpern gefüllt, deren äußerer Durchmesser und Länge etwa 15 mm betrug. Entsprechend der Form und den Abmessungen der Koaleszierkörper betrug der totale freie Raum innerhalb und zwischen den Körpern 87% des Volumens, das durch die Schicht ausgefüllt wurde. Die spezifische Oberfläche der Körper war 350 $m^2$ pro 1 $m^3$ eines Volumens, in das die Körper in unregelmäßiger, zufälliger Anordnung geschüttet wurden. Für den Versuch wurde eine Mischung zubereitet, die 75% Wasser und 25% eines Schweröls enthielt. Das Öl hatte eine spezifische Dichte von 0,95 kg pro $dm^3$ und eine Viskosität von 240 cSt (=2,4 $cm^2$/s). Abweichend von der vorgesehenen praktischen Verwendung der Vorrichtung, wurde das Gemisch unmittelbar vor der Einleitung in die Vorrichtung durchgerührt, um das Öl als feinste Partikel in dem Wasser gleichmäßig zu verteilen. Bei dem Versuch wurde daher auch fast kein Öl in dem Vorabscheideraum 4 abgetrennt. In dem Versuch wurden 0,5 m³ pro Stunde in die Vorrichtung eingeführt. In dem behandelten und gereinigten Wasser wurde nur noch ein restlicher Ölgehalt von 2 bis 3 ppm ermittelt. Dieser Restölgehalt liegt weit unter den gegenwärtig zulässigen Werten. In einem anderen Versuch wurde mit einer Höhe der Schicht von Koaleszierkörpern von nur 0,35 m noch ein ausreichendes Ergebnis erzielt.

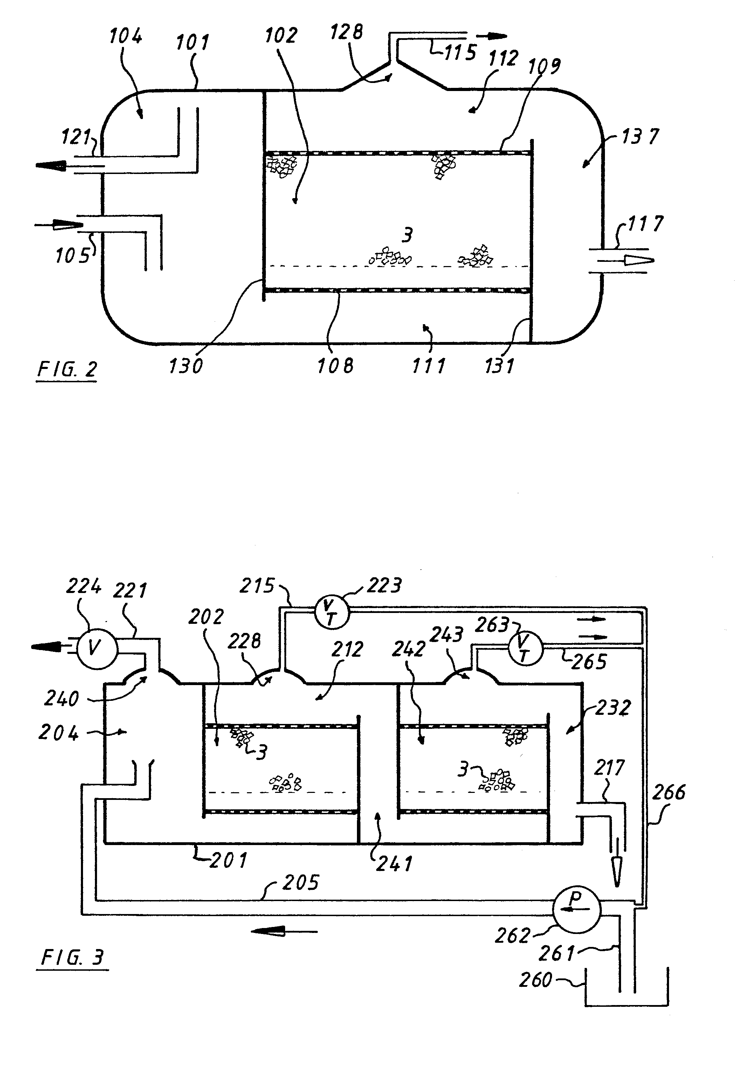

Fig. 2 zeigt eine Vorrichtung, die horizontal angeordnet ist und einen zylindrischen oder rechteckigen Querschnitt besitzt. Der Behälter 101 umfaßt einen Vorabscheideraum 104, eine Koaleszierkammer 102 und eine Abscheidekammer 112. Das Gemisch wird durch die Leitung 105 zugeführt. Von dem Vorabscheideraum 104 wird Öl durch die Leitung 121 entfernt. Die Koaleszierkammer 102 ist zwischen einer ersten vertikalen Wand 130, einer zweiten vertikalen Wand 131, einer unteren perforierten Platte 108 und einer oberen perforierten Platte 109 gebildet und schließt Koaleszierkörper der vorher beschriebenen Art ein. Das in der Vorabscheidekammer 104 vorgereinigte Gemisch steigt von dem Bodenraum 111 auf durch die Koaleszierkammer 102, wo die Ölpartikel zusammenfließen, um größere Tropfen zu formen, welche sich in einem Dom 128 an der oberen Seite der Abscheidekammer 112 sammeln und von hier durch eine Leitung 115 weggeführt werden. Das gereinigte Wasser verläßt die Vorrichtung über einen Raum 132 und durch eine Auslaßleitung 117.

Fig. 3 zeigt eine im wesentlichen horizontal angeordnete Vorrichtung, die etwa der gemäß Fig. 2 entspricht, aber eine zweite Koaleszierkammer aufweist. Der Behälter 201 umfaßt einen Vorabscheideraum 204, der mit einem Dom 240 und mit einer Ölauslaßleitung 221

0148444

mit einem Ventil 224 versehen ist, eine erste Koaleszierkammer 202 mit einer ersten Abscheidekammer 212, einen Überströmraum 241, eine zweite Koaleszierkammer 242 mit einem zweiten Abscheideraum 243 und einen abschließenden Raum 232 mit einer Auslaßleitung 217 für das gereinigte Wasser.

Von einem Tank 260 zum Sammeln des ölhaltigen Bilgenwassers wird das Gemisch durch eine Saugleitung 261 durch eine Pumpe 262, beispielsweise eine das Gemisch nicht emulgierende Exzenterschneckenpumpe, angesaugt und mit gewissem Druck durch die Einlaßleitung 205 in den Vorabscheideraum 204 eingedrückt. Größere Anteile und Öltropfen sammeln sich in dem Dom 240 und werden durch die Leitung 221 abgeleitet. Das vorgereinigte Gemisch wird durch die erste Koaleszierkammer 202 geführt, wo ein erheblicher Teil der feinen Ölpartikel zu Öltropfen zusammenfließt, die nach oben in den Dom 228 der ersten Abscheidekammer 212 aufsteigen und von dort durch eine erste Ölleitung 215 über ein Drosselventil 223 entfernt werden. Das bereits weitgehend gereinigte Wasser wird weiter durch/die zweite Koaleszierkammer 242 geleitet. Hier setzen sich weitere, restliche Ölspuren an der Oberfläche der Koaleszierkörper 3 ab, um zusammenzufließen und Öltropfen zu bilden, die durch die zweite Abscheidekammer 230 nach oben wandern und durch die Leitung 265 über ein Drosselventil 263 abfließen. Normalerweise ist die Ölmenge, die durch die Leitungen 215,265 abfließt, sehr klein. Daher werden die Drosselventile 223,263 so eingestellt, daß immer ein wenig Wasser mit abgezogen wird, um eine annähernd konstante geringe Strömung in den Leitungen aufrechtzuerhalten. Die Leitungen werden in der Leitung 266 zusammengefaßt, die mit dem Ansaugrohr 261 der Pumpe verbunden ist, so daß das zusammengeflossene Öl aus den Abscheidekammern 212,243 wieder in den Vorabscheideraum 204 eingeführt wird, wo es sich sehr leicht absetzt.

Die Erfindung ist nicht auf die dargestellten Ausführungsbeispiele beschränkt. Gewisse Abänderungen sind im Rahmen der Erfindung möglich. So können beispielsweise zusätzliche Absperr- und Rückschlagventile so-wie auch Einrichtungen zur automatischen Steuerung des Abtrennungsprozesses vorgesehen werden. Ferner können Heizungseinrichtungen in der Vorrichtung angeordnet sein.

Patentansprüche

1. Verfahren zum Trennen eines Öl-Wasser-Gemisches, bei dem aus dem Öl-Wasser-Gemisch zunächst durch Schwerkrafttrennung gröbere Ölbestandteile entfernt und dann das vorgereinigte Gemisch durch eine Kammer geleitet wird, in der im Wasser eingeschlossene Ölpartikel an Einrichtungen zur Vereinigung zu größeren Tropfen gebracht werden, die aus dem Wasser abtrennbar sind, dadurch gekennzeichnet, daß das vorgereinigte Gemisch in einer Behandlungszeit von 5 bis 15 Minuten durch eine Schicht von einzelnen, losen Koaleszierkörpern aus einem oleophilen Thermoplasten mit spezifisch großer Oberfläche und relativ großem freien Strömungsquerschnitt zwischen und in ihnen geleitet wird, wobei Wasser und das zusammenfließende Öl nach oben durch die Schicht aufsteigen und das gereinigte Wasser oberhalb der Schicht getrennt von dem sich sammelnden Öl abgeführt wird.

2. Verfahren nach Anspruch 1, dadurch gekennzeichnet, daß das vorgereinigte Gemisch mit einer Strömungsgeschwindigkeit von nicht mehr als 0,05 m/min durch die Koalesziermkammer geleitet wird.

3. Vorrichtung zum Trennen eines Öl-Wasser-Gemisches nach einem Verfahren gemäß Anspruch 1 oder 2, bestehend aus einem Behälter mit einem Vorabscheideraum, in den das Zuführungsrohr für das Gemisch mündet und von dem ein Auslaß für abgetrenntes Öl beginnt und mit weiteren Räumen, in denen Einrichtungen angeordnet sind, an denen sich kleine Ölpartikel absetzen, zu größeren Tropfen zusammenfließen und von dem Wasser abgeschieden werden können, dadurch gekennzeichnet, daß eine Koaleszierkammer (2,102,202,242) eine Vielzahl von losen Koaleszierkörpern (3) enthält,

die Koaleszierkörper (3) aus einem oleophilen Thermoplasten bestehen, leichter als Wasser sind und eine Form besitzen, die eine spezifisch große Oberfläche und bei ungeordnetem Aneinanderliegen einen relativ großen freien Strömungsquerschnitt zwischen und in ihnen ergibt,

die Koaleszierkammer (2,102,202,242) ein größeres Volumen besitzt als für die Vielzahl der in ihr enthaltenen Koaleszierkörper (3) mindestens notwendig ist, so daß die Körper ihre Lage in der Kammer verändern können, die Koaleszierkammer (2,102,202, 242) an ihrer oberen und an ihrer unteren Seite mit die Koaleszierkörper (3) zurückhaltenden, perforierten Platten (8,9,108,109) versehen ist,

eine Abscheidekammer (12,112,212,243) oberhalb der oberen perforierten Platte (9,109) angeordnet ist, und ein Kanal (10) zur Zuführung des Öl-Wasser-Gemisches von dem Vorabscheideraum (4,104,204) zu der unteren perforierten Platte (8,108) führt und ein Ölableitungsrohr (15,115,215,265) für koaleszierte Ölbestandteile oben aus der Abscheidekammer (12,112,212,243) und ein Wasserabflußrohr (17,117,217) hinter dieser Abscheidekammer beginnen.

4. Vorrichtung nach Anspruch 3, dadurch gekennzeichnet, daß die Koaleszierkörper (3) eine solche Form und Abmessung besitzen, daß sie bei loser, willkürlicher Anordnung in einem Raum von 1 m$^3$ eine gesamte Oberfläche von wenigstens 300 m$^2$ und nur ein Materialvolumen von höchstens 20% dieses Raumes haben, vorzugsweise eine Ober-fläche von 350 m$^2$ und ein Materialvolumen von 13%.

5. Vorrichtung nach Anspruch 4, dadurch gekennzeichnet, daß die Höhe der Schicht von Koaleszierkörpern (3) in der Koaleszierkammer (2,102,202,242) wenigstens 0,35 m vorzugsweise etwa 0,5 m beträgt.

6. Vorrichtung nach einem der Ansprüche 3 bis 5, dadurch gekennzeichnet, daß in dem Ölableitungsrohr (15,115, 215,265) ein einstellbares Drosselventil (23,223, 263) angeordnet ist und das Öl-Wasser-Gemisch in den Behälter (1,101,201) mit einem Druck eingeführt wird, der höher ist als der Druck in dem Ölableitungsrohr hinter dem Drosselventil.

7. Vorrichtung nach Anspruch 6, dadurch gekennzeichnet, daß das Ölableitungsrohr (15,215,265) an eine Einrichtung (261,262) zur Zuführung des Öl-Wasser-Gemisches in den Vorabscheideraum (4,104,204) verläuft.

8. Vorrichtung nach einem der Ansprüche 3 bis 7, dadurch gekennzeichnet, daß der Behälter (1) und die in ihm untergebrachten Koaleszierkammer (2) und Abscheidekammer (12) stehende Zylinder sind, der oberhalb der Abscheidekammer (12) befindliche Kopfraum(4) als Vorabscheideraum ausgebildet ist und sich von dem Kopfraum (4) ein Ringraum als Kanal (10), der Abscheidekammer (12) und Koaleszierkammer (2) umgibt, bis zu einem Bodenraum (11) erstreckt, über dem sich die untere perforierte Platte (8) der Koaleszierkammer befindet.

9. Vorrichtung nach einem der Ansprüche 3 bis 7, dadurch gekennzeichnet, daß sich an eine erste Abscheidekammer (212) eine weitere Koaleszierkammer (242) sowie eine weitere Abscheidekammer (243) anschließen, aus der das gereinigte Wasser zu einem Auslaß (217) fließt.

FIG. 1

_FIG. 2_

_FIG. 3_